# EUROPEAN PATENT APPLICATION

(11) **EP 4 484 157 A1**
(43) Date of publication of application: **01.01.2025**
(21) Application number: 23802971.4
(22) Date of filing: 11.05.2023
(51) Int. Cl.: B32B 17/00, B32B 17/10, B32B 17/06, B32B 27/30, B32B 27/06, B32B 33/00, B32B 3/08, B32B 7/12, B32B 37/12, B32B 37/06, B32B 37/10, G02F 1/13, G02F 1/161, B60J 1/00

(54) **DIMMING ASSEMBLY AND PREPARATION METHOD THEREFOR, AND VEHICLE**

(30) Priority: 13.05.2022 CN 202210517042
(71) Applicant: Fuyao Glass Industry Group Co., Ltd., Fuqing, Fujian 350300 (CN)
(72) Inventor: ZHENG, Guoxin, Fuqing, Fujian 350300 (CN); LIN, Shou, Fuqing, Fujian 350300 (CN)
(74) Representative: Herrero & Asociados, S.L.
(86) International application number: PCT/CN2023/093363
(87) International publication number: WO 2023/217202

(57) **Abstract**

The present application relates to a dimming assembly and a preparation method thereof, and a vehicle. The dimming assembly includes a first light-transmitting plate, a first bonding layer, a dimming film, a second bonding layer, and a second light-transmitting plate, which are sequentially stacked. The first light-transmitting plate, the first bonding layer, and the dimming film are capable of being bonded through a lamination process. The second bonding layer is formed by curing a liquid optically-clear adhesive. An edge of the dimming film and an edge of the second bonding layer are inwardly recessed relative to an edge of the first bonding layer. The dimming assembly further includes a sealing member. The sealing member is positioned between the first bonding layer and the second light-transmitting plate and is in contact with the edge of the dimming film and the edge of the second bonding layer.

## Description

### CROSS-REFERENCE TO RELATED APPLICATIONS

This application claims priority to the Chinese patent application No. 2022105170427 filed on May 13, 2022, titled "DIMMING ASSEMBLY AND PREPARATION METHOD THEREFOR, AND VEHICLE", the contents of which are hereby incorporated by reference in their entireties.

### TECHNICAL FIELD

The present application relates to the field of glass, and in particular to a dimming assembly, a method for preparation the same, and a vehicle.

### BACKGROUND

Dimming glass is a new type of photoelectric glass with a dimming film sandwiched between two layers of glass, the transparent and opaque states of which are controlled by controlling on and off of the electric current. Conventional dimming glass includes a first glass substrate, a first bonding layer, a dimming film, a second bonding layer, and a second glass substrate, which are arranged in a stack body. The dimming film is bonded to the first glass substrate through the first bonding layer and bonded to the second glass substrate through the second bonding layer, respectively. The first bonding layer and the second bonding layer in the conventional dimming glass are each typically a polyvinyl butyral (PVB) bonding layer or an ethylene vinyl acetate (EVA) bonding layer. The conventional dimming glass is prepared by a lamination process, which may cause appearance defects and uneven (Mura) phenomenon of the dimming glass.

### SUMMARY

According to various embodiments, a dimming assembly with a good appearance and no Mura phenomenon is provided.

In addition, there is a need to provide a method for preparing the dimming assembly, and a vehicle including the dimming assembly.

A dimming assembly includes a first light-transmitting plate, a first bonding layer, a dimming film, a second bonding layer, and a second light-transmitting plate stacked in sequence. The first light-transmitting plate, the first bonding layer, and the dimming film are capable of being bonded through a lamination process. The second bonding layer is formed by curing a liquid optically clear adhesive. An edge of the dimming film and an edge of the second bonding layer are inwardly recessed relative to an edge of the first bonding layer.

The dimming assembly further includes a sealing member. The sealing member is located between the first bonding layer and the second light-transmitting plate and is in contact with the edge of the dimming film and the edge of the second bonding layer.

In an embodiment, a thickness of the second bonding layer is in a range from 0.2 mm to 1 mm.

In an embodiment, a viscosity of the liquid optically clear adhesive at 25°C is 500±200 mPa·s.

In an embodiment, the liquid optically clear adhesive includes an acrylic-based liquid optically clear adhesive or a silicone-based liquid optically clear adhesive.

In an embodiment, the dimming film includes a liquid crystal (LC) dimming film.

In an embodiment, the first light-transmitting plate and the second light-transmitting plate each include a single curved glass or a double curved glass.

In an embodiment, the sealing member is a sealing adhesive layer, or the sealing member includes a sealing adhesive layer and a surrounding dam adhesive layer. The surrounding dam adhesive layer is in contact with the edge of the dimming film, the edge of the second bonding layer, the sealing adhesive layer, the first bonding layer, and the second light-transmitting plate. The sealing adhesive layer is in contact with the surrounding dam adhesive layer, the first bonding layer, and the second light-transmitting plate.

In an embodiment, a material of the first bonding layer is selected from PVB and EVA.

In an embodiment, a thickness of the first bonding layer is in a range from 0.3 mm to 0.8 mm.

A method for preparing a dimming assembly includes steps of:
sequentially stacking and then laminating a first light-transmitting plate, a first bonding layer, and a dimming film, wherein an edge of the dimming film is inwardly recessed relative to that of the first bonding layer;
placing a sealing member on an inwardly recessed area of the first bonding layer after the step of laminating, wherein a thickness of the sealing member is greater than a thickness of the dimming film, and the sealing member forms a groove with a surface of the dimming film away from the first light-transmitting plate; and
filling the groove with a liquid optically clear adhesive, attaching a second light-transmitting plate, and curing the liquid optically clear adhesive, to obtain the dimming assembly.

In an embodiment, in the step of placing the sealing member on the inwardly recessed area of the first bonding layer after the step of laminating, an adhesive filling port is formed on the sealing member, and the adhesive filling port is in communication with the groove; and
the step of filling the groove with the liquid optically clear adhesive and attaching the second light-transmitting plate includes: attaching the second light-transmitting plate to a side of the dimming film away from the first light-transmitting plate, covering the groove with the second light-transmitting plate; and then filling the liquid optically clear adhesive into the groove through the adhesive filling port.

In an embodiment, an air release port is also formed on the sealing member. The sealing member has a first surface and a second surface opposite to each other. The adhesive filling port is located at an end of the first surface, and the air release port is located at another end of the first surface away from the adhesive filling port. A position on the second surface corresponding to the adhesive filling port is recorded as a reference point, the adhesive filling port and the reference point are in a same horizontal plane, and the air release port is located above the adhesive filling port. In the step of filling the liquid optically clear adhesive into the groove through the adhesive filling port, the stack body attached with the second light-transmitting plate is tilted, so that a distance from the adhesive filling port to the horizontal plane is greater than a distance from the reference point to the horizontal plane.

In an embodiment, the stack body is tilted at an angle in a range from 15 degrees to 45 degrees.

In an embodiment, the step of laminating includes: initially pressing the stacked first light-transmitting plate, first bonding layer, and dimming film at a vacuum degree ranged from -0.1 MPa to -0.09 MPa and a temperature less than or equal to 115°C.

In an embodiment, after the step of curing the liquid optically clear adhesive, the method further includes treating the cured stack body for 30 minutes to 90 minutes at a pressure ranged from 0.1 MPa to 0.6 MPa and a temperature ranged from 110°C to 140°C.

Alternatively, after the step of laminating and before the step of placing the sealing member on the inwardly recessed area of the first bonding layer, the method further includes treating the laminated stack body for 30 minutes to 90 minutes at a pressure ranged from 0.1 MPa to 0.6 MPa and a temperature ranged from 110°C to 140°C.

In an embodiment, the sealing member is a sealing adhesive layer. The step of placing the sealing member on the inwardly recessed area of the first bonding layer includes coating a sealing adhesive onto the inwardly recessed area of the first bonding layer. The step of curing the liquid optically clear adhesive includes curing the sealing adhesive to form the sealing adhesive layer.

In an embodiment, the sealing member includes a surrounding dam adhesive layer and a sealing adhesive layer. The step of placing the sealing member on the inwardly recessed area of the first bonding layer includes: placing the surrounding dam adhesive layer onto part of the inwardly recessed area of the first bonding layer; and placing the sealing adhesive layer onto rest of the inwardly recessed area of the first bonding layer after the step of curing the liquid optically clear adhesive.

In an embodiment, a thickness of the surrounding dam adhesive layer is in a range from 0.2 mm to 1 mm.

A vehicle includes the dimming assembly described above.

One or more embodiments of the present application are set forth in the accompanying drawings and the description below in details. Other features, objects and advantages of the present application will become apparent from the description, accompanying drawings and claims.

### BRIEF DESCRIPTION OF THE DRAWINGS

In order to illustrate the technical solutions in the embodiments of the present application or in the conventional technologies more clearly, the drawings used in the description of the embodiments or in the conventional technologies will be described briefly below. Apparently, the following described drawings are merely for the embodiments of the present application, and other drawings can be derived based on the disclosed drawings by those of ordinary skill in the art without any creative effort.
FIG. 1 is a schematic view of a process of filling a liquid optically clear adhesive in preparation of a dimming assembly.
FIG. 2 is a schematic structural view of a dimming glass in Example 1.
FIG. 3 is a schematic structural view of a dimming glass in Example 2.

### DETAILED DESCRIPTION

The technical solutions in the embodiments of the present application will be described clearly and completely below with reference to the accompanying drawings in the embodiments. Obviously, the described embodiments are merely some of, rather than all of, the embodiments of the present application. Based on the embodiments in the present application, other embodiments obtained by those of ordinary skill in the art without creative efforts all fall within the protection scope of the present application.

Unless otherwise defined, all technical and scientific terms used herein have the same meaning as commonly understood by those of ordinary skill in the technical field to which the present application belongs. The terminology used in the description of the present application is merely for the purpose of describing specific embodiments and is not intended to limit the present application.

In a first aspect of the present application, an embodiment of a dimming assembly is provided. The dimming assembly includes a first light-transmitting plate, a first bonding layer, a dimming film, a second bonding layer, and a second light-transmitting plate stacked in sequence.

Specifically, the first light-transmitting plate is selected from a glass plate and a polycarbonate plate. In an embodiment, the first light-transmitting plate is a single curved glass or a double curved glass. Further, the first light-transmitting plate is a double curved glass, and the dimming assembly can be used in vehicles. It can be understood that the first light-transmitting plate can alternatively be a flat glass. In terms of functional glass, the first light-transmitting plate can be a coated heat-insulating glass.

Specifically, the first light-transmitting plate, the first bonding layer, and the dimming film can be bonded through a lamination process. Before preparing the dimming assembly, a material of the first bonding layer is a non-liquid optically clear adhesive. The non-liquid optically clear adhesive herein refers to an adhesive material different from the liquid optically clear adhesive. For example, before preparing the dimming assembly, the material of the first bonding layer can be a solid or solidified optically clear adhesive (OCA) or can be a polymer adhesive. In an embodiment, before preparing the dimming assembly, the material of the first bonding layer is selected from PVB and EVA. In an embodiment, a thickness of the first bonding layer is in a range from 0.3 mm to 0.8 mm. In a specific example, the thickness of the first bonding layer is 0.38 mm or 0.76 mm.

In an embodiment, the first bonding layer is a PVB adhesive film. In another embodiment, the first bonding layer is an EVA adhesive film with a high-level UV blocking effect, having a UV cutoff band equal to or greater than 390 nm and a UV blocking rate equal to or greater than 99%. In a specific example, the UV cutoff band of the EVA adhesive film is 400 nm. The material of the first bonding layer can be one or both of PVB and EVA. On the one hand, the first light-transmitting plate and the dimming film can be bonded by the two materials through a lamination process, which is a mature process and has high production efficiency. On the other hand, the first bonding layer made of the two materials has a UV blocking effect, which can protect the dimming film. Moreover, the first bonding layer has a good mechanical performance, thereby ensuring the mechanical performance of the dimming assembly.

The edge of the dimming film is inwardly recessed relative to that of the first bonding layer. The recessed distance of the dimming film relative to the first bonding layer can be adjusted according to the application field of the dimming assembly. For example, in an embodiment, the dimming assembly is a door glass, and the edge of the dimming film is 6 mm to 10 mm away from the edge of the first light-transmitting plate. In another embodiment, the dimming assembly is a skylight glass. The skylight printing area is equal to or greater than 30 mm, and the dimming film enters the skylight printing area by 10 mm to 20 mm.

In an embodiment, the dimming film includes a liquid crystal dimming film. The dimming functional layer in the liquid crystal dimming film is in a liquid state and has fluidity and a small thickness from 6 µm to 9 µm. If the liquid crystal dimming film is unevenly stressed during the preparation, undesirable phenomena such as water ripples and Mura phenomenon are easily generated. The conventional preparation method is difficult to ensure a good appearance of the dimming assembly, which becomes a major technical problem that troubles the persons in the art. The dimming assembly in the present embodiments solves the above problem. It can be understood that in other embodiments, the dimming film can be a polymer dispersed liquid crystal (PDLC) dimming film.

Specifically, the edge of the second bonding layer is inwardly recessed relative to that of the first bonding layer. Further, the edge of the second bonding layer is flush with the edge of the dimming film.

Further, before preparing the dimming assembly, the material of the second bonding layer is a liquid optically clear adhesive. The second bonding layer is formed by curing the liquid optically clear adhesive. Compared with the solid or solidified OCA, the liquid optically clear adhesive is in a liquid state before use and forms the second bonding layer by adhesive filling and curing. The liquid optically clear adhesive is not pressed during the preparation of the dimming assembly, ensuring that the dimming film is as stress-free as possible. In contrast, a bonding process of a light-transmitting plate and a dimming film with the solid or solidified OCA is similar to the bonding process of the light-transmitting plate and the dimming film with an EVA adhesive film or a PVB adhesive film, both involving the lamination process. As a result, when the second bonding layer is the solid or solidified OCA, the dimming film is still stressed unevenly, causing the Mura phenomenon.

Furthermore, the liquid optically clear adhesive can have good fluidity in order to ensure that the dimming film is as stress-free as possible during the formation of the second bonding layer, thereby ensuring that the prepared dimming assembly has a good appearance. In an embodiment, the viscosity of the liquid optically clear adhesive at 25°C is 500±200 mPa·s according to GB/T 2794-1995. Furthermore, in this embodiment, the liquid optically clear adhesive can be an acrylic-based liquid optically clear adhesive or a silicone-based liquid optically clear adhesive. In a specific example, the liquid optically clear adhesive is a silicone-based liquid optically clear adhesive. The silicone-based liquid optically clear adhesive has a lower shrinkage rate and better high-temperature resistance than the acrylic-based liquid optically clear adhesive. Specifically, the shrinkage rate of the silicone-based liquid optically clear adhesive is about 0.1%, which is much smaller than 3% of the shrinkage rate of the acrylic-based liquid optically clear adhesive. In addition, the silicone-based liquid optically clear adhesive can withstand high temperatures up to 120°C, while the acrylic-based liquid optically clear adhesive can generally withstand high temperatures between 90°C and 100°C.

Specifically, the thickness of the second bonding layer is in a range from 0.2 mm to 1 mm. In an embodiment, the thickness of the second bonding layer is 0.2 mm, 0.3 mm, 0.4 mm, 0.5 mm, 0.6 mm, 0.7 mm, 0.8 mm, 0.9 mm, 1 mm, or in a range defined by any two of these values. The second bonding layer within the thickness range described above can bond the dimming film and the second light-transmitting plate well. It can be understood that the thickness of the second bonding layer can be greater than 1 mm. However, due to the high price of the liquid optically clear adhesive, the second bonding layer with an over large thickness will increase the cost, which is not conducive to actual production. Therefore, taking cost and bonding performance into consideration, the thickness of the second bonding layer is in a range from 0.2 mm to 1 mm.

The second light-transmitting plate is selected from a glass plate and a polycarbonate plate. In an embodiment, the second light-transmitting plate is a single curved glass or a double curved glass. Further, the second light-transmitting plate is a double curved glass, and the dimming assembly can be used in vehicles. It can be understood that the second light-transmitting plate can alternatively be a flat glass. Specifically, the edge of the second light-transmitting plate is flush with the edge of the first light-transmitting plate.

Further, the second bonding layer and the second light-transmitting plate are disposed on the side of the dimming film away from the first light-transmitting plate after the lamination process of the first light-transmitting plate, the first bonding layer, and the dimming film. In this way, during the lamination process of the first light-transmitting plate, the first bonding layer, and the dimming film, the dimming film is stressed only on one side, preventing both sides of the dimming film from being respectively pressed by the first light-transmitting plate and the second light-transmitting plate, thus further ensuring evenness of the dimming film and avoiding Mura phenomenon and appearance defects.

Furthermore, the dimming assembly further includes a sealing member. The sealing member is located between the first bonding layer and the second light-transmitting plate and is in contact with the edge of the dimming film and the edge of the second bonding layer.

In an embodiment, the sealing member is a sealing adhesive layer.

In another embodiment, the sealing member includes a sealing adhesive layer and a surrounding dam adhesive layer. The surrounding dam adhesive layer is in contact with the edge of the dimming film, the edge of the second bonding layer, the sealing adhesive layer, the first bonding layer, and the second light-transmitting plate. The sealing adhesive layer is in contact with the surrounding dam adhesive layer, the first bonding layer, and the second light-transmitting plate. Specifically, the surrounding dam adhesive layer can be a butyl adhesive tape, a VHB adhesive tape, etc. In a specific example, the surrounding dam adhesive layer and the sealing adhesive layer are stacked in a direction perpendicular to the thickness direction of the dimming glass, and the surrounding dam adhesive layer is more adjacent to the dimming film.

It can be understood that the material of the sealing member is not limited to the materials described above. Any sealing adhesive that does not swell the first bonding layer, has water vapor barrier sealing properties, and possess an adhesive force with glass equal to or greater than 600 N, determined by testing, can be used as the material of the sealing member in the present embodiment. The specific adhesion test method can be referred to the adhesion test for a glass adhesive.

On the one hand, the liquid optically clear adhesive is in a liquid state, and needs to be enclosed with a sealing member during the preparation of the dimming assembly. On the other hand, the inventors found through experiments that the sealing performance of the liquid optically clear adhesive itself is insufficient, and water vapor can enter the dimming film and cause separation between the dimming film and the adhesive surface in a boiling test. Therefore, the sealing member is required to surround the edge of the second bonding layer to block water vapor permeation and ensure reliability of the product.

Further, in some embodiments, an ink layer is disposed on the surface of the first light-transmitting plate facing the second light-transmitting plate. The edge of the dimming film is inwardly recessed relative to the edge of the ink layer. The distance between the edge of the dimming film and the edge of the ink layer is in a range from 5 mm to 30 mm. Specifically, the ink layer can be formed through a printing process and the like after the first light-transmitting plate is formed.

In some embodiments, an ink layer is disposed on the surface of the second light-transmitting plate facing the first light-transmitting plate or on the surface of the second light-transmitting plate away from the first light-transmitting plate. The edge of the dimming film is inwardly recessed relative to the edge of the ink layer. The distance between the edge of the dimming film and the edge of the ink layer is in a range from 5 mm to 30 mm. Specifically, the ink layer can be formed through a printing process and the like after the second light-transmitting plate is formed.

The dimming assembly of the present embodiments at least has the following advantages.
(1) The dimming assembly includes a first light-transmitting plate, a first bonding layer, a dimming film, a second bonding layer, and a second light-transmitting plate that are stacked in sequence. The first bonding layer is a non-liquid optically clear adhesive before preparing the dimming assembly. The first light-transmitting plate, the first bonding layer, and the dimming film can be bonded through a lamination process. In the lamination process, only one side of the dimming film is stressed, preventing both sides of the dimming film from being pressed, which ensures the evenness of the dimming film and avoids Mura phenomenon and appearance defects. The second bonding layer, being a liquid optically clear adhesive before the preparation of the dimming assembly, can bond the dimming film and the second light-transmitting plate by adhesive filling and curing, so that the dimming film is not stressed, thereby ensuring that the dimming assembly has a good appearance with no Mura phenomenon. The above-described dimming assembly is particularly suitable for the case where the dimming film has good fluidity, e.g., is an LC dimming film, and the first and the second light-transmitting plates are double curved glasses.
(2) Before preparing the dimming assembly, the first bonding layer is a non-liquid optically clear adhesive and has a good mechanical performance, so that the dimming assembly can meet the requirements in actual use.
(3) The dimming assembly further includes a sealing member. On the one hand, the liquid optically clear adhesive is in a liquid state, and needs to be enclosed with a sealing member during the preparation of the dimming assembly. On the other hand, the inventors found through experiments that the sealing performance of the liquid optically clear adhesive itself is insufficient, and water vapor can enter the dimming film and cause separation between the dimming film and the adhesive surface in a boiling test. Therefore, the sealing member is adopted to block water vapor and ensure reliability of the product.

In a second aspect of the present application, an embodiment of a method for preparing the dimming assembly as described above is provided. The method includes the following steps.

Step S110: sequentially stacking and then laminating a first light-transmitting plate, a first bonding layer, and a dimming film.

The material of the first bonding layer is a non-liquid optically clear adhesive before preparing the dimming assembly. For example, before preparing the dimming assembly, the material of the first bonding layer can be a solid or solidified OCA, or a polymer adhesive. In an embodiment, before preparing the dimming assembly, the material of the first bonding layer is selected from PVB and EVA. The edge of the dimming film is inwardly recessed relative to that of the first light-transmitting plate and that of the first bonding layer.

Particularly, the step of laminating includes initially pressing the first light-transmitting plate, the first bonding layer, and the dimming film stacked in a vacuum bag at a vacuum degree ranged from -0.1 MPa to -0.09 MPa and a temperature less than or equal to 115°C.

In the step of laminating, since a soft vacuum bag e.g., made of a polyester film, is used for partial bonding, only one side of the dimming film is stressed, which prevents both sides of the dimming film from being pressed. In addition, a liquid optically clear adhesive is used to form the second light-transmitting plate and seal the dimming film after the partial bonding, so that the dimming film is not stressed on both sides at the same time during the entire process, avoiding appearance defects caused by uneven thickness of the dimming film, especially a liquid dimming film or a dimming film having a functional layer with good fluidity.

Step S120: placing a sealing member on an inwardly recessed area of the first bonding layer after the lamination. The thickness of the sealing member is greater than the thickness of the dimming film, and the sealing member forms a groove with a surface of the dimming film away from the first light-transmitting plate.

Specifically, the thickness of the sealing member is in a range from 0.2 mm to 1 mm. The width of the sealing member is in a range from 1 mm to 3 mm. In this embodiment, the thickness direction of the sealing member is the same as the thickness direction of the dimming assembly, and the width direction of the sealing member is perpendicular to the thickness direction thereof. Specifically, the width of the sealing member refers to the distance between the edge of the sealing member and the edge of the dimming film.

Step S130: filling the groove with a liquid optically clear adhesive, attaching a second light-transmitting plate, and curing the liquid optically clear adhesive, to obtain the dimming assembly.

Specifically, in the step of placing the sealing member on the inwardly recessed area of the first bonding layer after the lamination, an adhesive filling port, which is in communication with the groove, is formed on the sealing member.

The step of filling the groove with the liquid optically clear adhesive and attaching the second light-transmitting plate includes: attaching the second light-transmitting plate to a side of the dimming film away from the first light-transmitting plate, covering the groove with the second light-transmitting plate; and then filling the liquid optically clear adhesive into the groove through the adhesive filling port.

Further, while the adhesive filling port is formed on the sealing member, an air release port is also formed on the sealing member, to facilitate air release and defoaming. In a specific example, the sealing member has one adhesive filling port and one air release port. It can be understood that the numbers of the adhesive filling port and the air release port on the sealing member are not limited, as long as the groove can be filled with the liquid optically clear adhesive and the air inside can be released. For example, there can be one adhesive filling port and two air release ports, or two adhesive filling ports and two air release ports, etc.

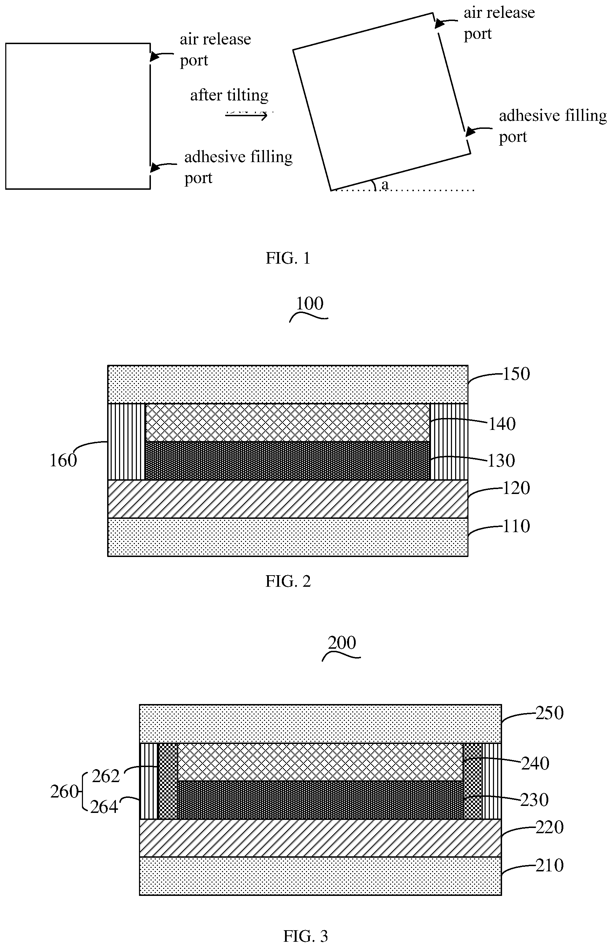

Furthermore, referring to FIG. 1, the sealing member has a first surface and a second surface opposite to each other. The adhesive filling port is located at an end of the first surface, and the air release port is located at another end of the first surface away from the adhesive filling port. The position on the second surface corresponding to the adhesive filling port is recorded as a reference point, the adhesive filling port and the reference point are in a same horizontal plane, and the air release port is located above the adhesive filling port. In the step of filling the liquid optically clear adhesive into the groove through the adhesive filling port, the stack body attached with the second light-transmitting plate is tilted, so that a distance from the adhesive filling port to the horizontal plane is greater than a distance from the reference point to the horizontal plane.

In the step of filling the liquid optically clear adhesive into the groove through the adhesive filling port, the liquid optically clear adhesive flows to the lower side of the groove, and the air inside the groove is released from the upper side, thereby facilitating air release. If the surface on which the adhesive filling port and the air release port are located is disposed horizontally or vertically, the liquid optically clear adhesive will easily flow to the two sides of the groove. Due to the viscosity of the liquid optically clear adhesive, air will be easily sealed in the groove and be difficultly released. The present method for filling the liquid optically clear adhesive into the groove and attaching the second light-transmitting plate is conducive to gas release.

It should be noted that the orientations or positional relationships indicated by terms "upper", "below", "horizontal", "vertical", etc. herein are all based on the orientations or positional relationships shown in the drawings. These terms are mainly for better description and are not intended to imply that the indicated elements or components must have the specific orientations, and should not be construed as limitations to the present application.

It can be understood that, in some other embodiments, the step of filling the groove with the liquid optically clear adhesive and attaching the second light-transmitting plate includes: firstly filling the groove with the liquid optically clear adhesive, and then attaching the second light-transmitting plate. In this manner, there is no need to form the adhesive filling port on the sealing member.

In an embodiment, after the step of curing the liquid optically clear adhesive, the method further includes: treating the cured stack body for 30 minutes to 90 minutes at a pressure ranged from 0.1 MPa to 0.6 MPa and a temperature ranged from 110°C to 140°C.

In another embodiment, after the step of laminating and before the step of placing the sealing member on the inwardly recessed area of the first bonding layer, the method further includes: treating the laminated stack body for 30 minutes to 90 minutes at a pressure ranged from 0.1 MPa to 0.6 MPa and a temperature ranged from 110°C to 140°C.

Experiments have shown that by using either of the above two methods, the dimming film can be firmly bonded to the first light-transmitting plate and the second light-transmitting plate, and the prepared dimming assembly can have a good appearance without Mura phenomenon.

Specifically, in an embodiment, the sealing member includes a surrounding dam adhesive layer and a sealing adhesive layer. The step of placing the sealing member on the inwardly recessed area of the first bonding layer includes: placing the surrounding dam adhesive layer onto part of the inwardly recessed area of the first bonding layer; and placing the sealing adhesive layer onto rest of the inwardly recessed area of the first bonding layer after the step of curing the liquid optically clear adhesive.

In another embodiment, the sealing member is a sealing adhesive layer. The step of placing the sealing member on the inwardly recessed area of the first bonding layer includes coating a sealing adhesive onto the inwardly recessed area of the first bonding layer. The step of curing the liquid optically clear adhesive includes curing the sealing adhesive to form the sealing adhesive layer.

In a conventional dimming assembly, which can be prepared by a lamination process, the first bonding layer and the second bonding layer are PVB or EVA adhesive films, which are subjected to high temperature and high pressure treatment in the lamination process, causing appearance defects and Mura phenomenon. Alternatively, the materials of the first bonding layer and the second bonding layer of the dimming assembly can be both liquid optically clear adhesives before preparation of the dimming assembly by the liquid adhesive filling process. The appearance of the prepared dimming assembly may have no issue, but the preparation process is complex and inefficient, and it is difficult to well attach a flat dimming film onto a double curved light-transmitting plate. Besides, the liquid optically clear adhesive does not possess a UV blocking function, cannot protect the dimming film, and has poor mechanical properties, making it difficult for the performance of the prepared dimming assembly to meet requirements.

The method for preparing the dimming assembly in the present embodiments at least has the following advantages.
(1) In the method for preparing the dimming assembly in the present embodiments, a first light-transmitting plate, a first bonding layer, and a dimming film are laminated firstly. In the lamination process, the dimming film is stressed only on one side, preventing both sides of the dimming film from being pressed, ensuring evenness of the dimming film and avoiding Mura phenomenon and appearance defects. Subsequently, a sealing member with an adhesive filling port and an air release port is placed around the edge of the dimming film, and a second light-transmitting plate is attached. By adhesive filling and curing, the dimming film and the second light-transmitting plate are bonded together, which ensures that the dimming film is not stressed during this process, and the dimming assembly has a good appearance without Mura phenomenon.
(2) In the method for preparing the dimming assembly in the present embodiments, a partial bonding process using a PVB adhesive film or an EVA adhesive film is initially performed, which is far more efficient than the liquid optically clear adhesive. The partial bonding process, e.g., the vacuum bag process, is easier to perform in the automotive industry, which ensures that a flat dimming film can be well attached onto a double curved light-transmitting plate. Then, the filling of the liquid optically clear adhesive is carried out, which is the only one adhesive filing process, improving the efficiency of production while ensuring that a flat dimming film can be well attached onto a double curved light-transmitting plate.
(3) In the method for preparing the dimming assembly in the present embodiments, a sealing member is placed around the edge of the dimming film. On the one hand, the liquid optically clear adhesive is in a liquid state, and thus needs to be enclosed with a sealing member in preparation of the dimming assembly. On the other hand, the inventors found through experiments that the sealing performance of the liquid optically clear adhesive itself is insufficient, and water vapor can enter the dimming film and cause separation between the dimming film and the adhesive surface in a boiling test. Therefore, the sealing member is required to block water vapor permeation and ensure reliability of the product.
(4) In the method for preparing the dimming assembly in the present embodiments, two kinds of sealing processes are combined to form an integrated method, which not only ensures a good appearance of the product, but also provides the dimming assembly with good mechanical properties and sealing performance, resulting in more reliable product performance.

In a third aspect of the present application, an embodiment of a vehicle is provided. The vehicle includes the dimming assembly described in the above embodiments.

In order to make the purpose and advantages of the present application clearer, the dimming assembly of the present application and the effects thereof are further described in detail below with reference to specific examples. It should be understood that the specific examplesdescribed herein are only used to explain the present application and shall not be used to limit the present application.

### Example 1

Referring to FIG. 2, the present example provides a dimming assembly, specifically a dimming glass 100. The dimming glass 100 includes a first light-transmitting plate 110, a first bonding layer 120, a dimming film 130, a second bonding layer 140, and a second light-transmitting plate 150 stacked in sequence. The first light-transmitting plate 110 and the second light-transmitting plate 150 are double curved glasses, with a primary curvature ranged from 2293 mm to 4900 mm, a secondary curvature ranged from 4887 mm to 475778 mm, and a thickness of 2.1 mm. The first bonding layer 120 is a PVB adhesive film with a thickness of 0.38 mm. Before preparing the dimming assembly, the second bonding layer 140 is a liquid optical clear adhesive, specifically liquid optical clear adhesive US 108, with a thickness of 0.4 mm. The dimming film 130 is an LC dimming film. The dimming film 130 and the second bonding layer 140 are both inwardly recessed relative to the first light-transmitting plate 110 and the second light-transmitting plate 150. A sealing adhesive layer 160, specifically a polyurethane adhesive, is disposed around the edge of the dimming film 130 and the edge of the second bonding layer 140.

The dimming glass of the present example was prepared according to the following steps.
(1) The first light-transmitting plate was cleaned, and the PVB adhesive film and the dimming film were placed thereon and fixed to obtain a partially bonded glass. The PVB adhesive film was previously sized to have its edge slightly larger than the edge of the first light-transmitting plate by 2 mm to 3 mm.
(2) The partially bonded glass was placed into a vacuum bag for cold vacuuming and initial pressing at a vacuum degree of -0.09 MPa and a maximum temperature of 115 °C.
(3) The polyurethane adhesive was coated in a 2 mm area from the edge of the dimming film of the partially bonded glass after the initial pressing. The thickness of the polyurethane adhesive was 0.8 mm. Local areas were left without coating the polyurethane adhesive to form two ports, one for adhesive filling and one for air release. Subsequently, the second light-transmitting plate was attached.
(4) The stack body obtained from step (3) was tilted to an angle of 20 degrees, filled with the liquid optically clear adhesive while allowing air to release, and then cured at room temperature.
(5) The cured stack body obtained from step (4) was placed in an autoclave for high pressure and high temperature treatment. The pressure was 0.8 MPa, the temperature was 110 °C, and the treatment at the temperature was persisted for 70 minutes, to obtain the dimming glass.

### Example 2

Referring to FIG. 3, the present example provides a dimming assembly, specifically a dimming glass 200. The dimming glass 200 includes: a first light-transmitting plate 210, a first bonding layer 220, a dimming film 230, a second bonding layer 240, and a second light-transmitting plate 250 stacked in sequence. The first light-transmitting plate 210 and the second light-transmitting plate 250 are double curved glasses, with a primary curvature ranged from 2293 mm to 4900 mm, a secondary curvature ranged from 4887 mm to 475778 mm, and a thickness of 2.1 mm. The first bonding layer 220 is a PVB film with a thickness of 0.38 mm. Before preparing the dimming assembly, the second bonding layer 240 is a liquid optical clear adhesive, specifically liquid optical clear adhesive US108, with a thickness of 0.4 mm. The dimming film 230 is an LC dimming film. The dimming film 230 and the second bonding layer 240 are both inwardly recessed relative to the first light-transmitting plate 210 and the second light-transmitting plate 250. A sealing member 260 is disposed around the edge of the dimming film 230 and the edge of the second bonding layer 240. The sealing member 260 includes a surrounding dam adhesive layer 262, specifically a butyl adhesive tape, and a sealing adhesive layer 264, specifically a Sika adhesive. The surrounding dam adhesive layer 262 is more adjacent to the dimming film 230 than the sealing adhesive layer 264.

The dimming glass of the present example was prepared according to the following steps.
(1) The first light-transmitting plate was cleaned, and the PVB adhesive film and the dimming film were placed thereon and fixed to obtain a partially bonded glass. The PVB adhesive film was previously sized to have its edge slightly larger than the edge of the first light-transmitting plate by 1 mm to 3 mm.
(2) The partially bonded glass was placed into a vacuum bag for cold vacuuming and initial pressing at a vacuum degree of -0.09 MPa and a maximum temperature of 115 °C.
(3) The butyl adhesive tape was placed in a 2 mm area from the edge of the dimming film of the partially bonded glass after the initial pressing. The thickness of the butyl adhesive tape was 0.4 mm, and two ports were formed on the butyl adhesive tape, one for adhesive filling and one for air release. Subsequently, the second light-transmitting plate was attached.
(4) The stack body obtained from step (3) was tilted to an angle of 30 degrees, filled with the liquid optically clear adhesive while allowing air to release, and then cured at room temperature.
(5) The cured stack body obtained from step (4) was placed in an autoclave for high pressure and high temperature treatment. The pressure was 0.3 MPa, the temperature was 115 °C, and the treatment at the temperature was persisted for 70 minutes.
(6) The Sika adhesive was coated around the edge of the stack body after the high pressure and high temperature treatment, and cured at room temperature, to obtain the dimming glass.

### Example 3

The dimming glass of the present example and the dimming glass of Example 2 are the same in structure and different in preparation method. The dimming glass of the present example was prepared according to the following steps.
(1) The first light-transmitting plate was cleaned, and the PVB adhesive film and the dimming film were placed thereon and fixed to obtain a partially bonded glass. The PVB adhesive film was previously sized to have its edge slightly larger than the edge of the first light-transmitting plate by 1 mm to 3 mm.
(2) The partially bonded glass was placed into a vacuum bag for cold vacuuming and initial pressing at a vacuum degree of -0.09 MPa and a maximum temperature of 115 °C.
(3) The partially bonded glass after the initial pressing was placed in an autoclave for high pressure and high temperature treatment. The pressure was 0.6 MPa, the temperature was 135 °C, and the treatment at the temperature was persisted for 40 minutes.
(4) The butyl adhesive tape was placed in a 2 mm area from the edge of the dimming film of the partially bonded glass obtained from step (3). The thickness of the butyl adhesive tape was 0.4 mm, and two ports were formed on the butyl adhesive tape, one for adhesive filling and one for air release. Subsequently, the second light-transmitting plate was attached.
(5) The stack body obtained in step (4) was tilted to an angle of 20 degrees, filed with the liquid optically clear adhesive while allowing air to release, and then cured at room temperature.
(6) The Sika adhesive was coated around the edge of the cured stack body obtained from step (5), and cured at room temperature, to obtain the dimming glass.

### Comparative Example 1

Comparative Example 1 provides a dimming glass. The dimming glass includes a first light-transmitting plate, a first bonding layer, a dimming film, a second bonding layer, and a second light-transmitting plate stacked in sequence. the first light-transmitting plate and the second light-transmitting plate are double curved glasses, with a primary curvature ranged from 2293 mm to 4900 mm, a secondary curvature ranged from 4887 mm to 475778 mm, and a thickness of 2.1 mm. The first bonding layer and the second bonding layer are PVB adhesive films each with a thickness of 0.38 mm. The dimming film is an LC dimming film. The dimming film is inwardly recessed relative to the first light-transmitting plate and the second light-transmitting plate.

The dimming glass of Comparative Example 1 was prepared according to the following steps.
(1) The first light-transmitting plate was cleaned. One of the PVB adhesive films, the LC dimming film, the other of the PVB adhesive films, the second light-transmitting plate were placed on the first light-transmitting plate in sequence and fixed to obtain a stack body. The PVB adhesive films were previously sized, and the edge of the first PVB adhesive film was slightly larger than the edge of the first light-transmitting plate by 2 mm to 3 mm.
(2) The stack body was placed into a vacuum bag for cold vacuuming and initial pressing at a vacuum degree of -0.09 MPa and a maximum temperature of 115 °C. Subsequently, the stack body after was placed in an autoclave for high pressure and high temperature treatment. The pressure was 0.6 MPa, the temperature was 135 °C, and the treatment at the temperature was persisted for 40 minutes, to obtain the dimming glass.

### Comparative Example 2

Comparative Example 2 provides a dimming glass. The dimming glass includes a first light-transmitting plate, a first bonding layer, a dimming film, a second bonding layer, and a second light-transmitting plate stacked in sequence. The first light-transmitting plate and the second light-transmitting plate are double curved glasses, with a primary curvature ranged from 2293 mm to 4900 mm, a secondary curvature ranged from 4887 mm to 475778 mm, and a thickness of 2.1 mm. The first bonding layer and the second bonding layer are both a liquid optically clear adhesive, specifically liquid optically clear adhesive US108, with a thickness of 0.8 mm. The dimming film is an LC dimming film. The first bonding layer, the dimming film, and the second bonding layer are inwardly recessed relative to the first light-transmitting plate and the second light-transmitting plate. A surrounding dam adhesive layer, specifically a butyl adhesive tape, and a sealing adhesive layer, specifically a Sika adhesive, are disposed around the edge of the first bonding layer, the dimming film, and the second bonding layer.

The dimming glass of Comparative Example 2 was prepared according to the following steps.
(1) The first light-transmitting plate was cleaned. Lines were scribed on one surface of the first light-transmitting plate to define a scribed region matching the outline dimension of the LC dimming film (including PET surrounding the dimming film).
(2) The butyl adhesive tape was attached on the other surface of the first light-transmitting plate, with its edge aligned with the lines. One adhesive filling port and four air release ports were formed on the butyl adhesive tape. A flat liquid crystal film was attached onto the butyl adhesive tape to form a flat box, with the edge of the liquid crystal film aligned with the edge of the butyl adhesive tape. Using an adhesive filling equipment, a needle was inserted into the adhesive filling port to fill the liquid optically clear adhesive. When the adhesive filling was finished, the stack body was kept standing horizontally for 5 minutes. Subsequently, a release film was covered on the liquid crystal film, and two or three equally sized white glass plates were placed on the release film. The stack body was secured with a tape and was kept standing horizontally for 10 minutes. After that, the liquid optically clear adhesive was cured at room temperature for 30 minutes, the white glass plates and the release film were removed, and the overflowed residual adhesive was cleaned.
(3) Another butyl adhesive tape was attached along the position where the first butyl adhesive tape was attached. One adhesive filling port and four air release ports were formed on the butyl adhesive tape. The second light-transmitting plate was attached onto the second butyl adhesive tape, to form another flat box. The liquid optically clear adhesive was filled again, kept standing horizontally for 5 minutes, and cured at room temperature. After curing, the residual adhesive was cleaned, and a Sika adhesive was applied surrounding the stack body, to obtain the dimming glass.

### Comparative Example 3

Comparative Example 3 provides a dimming glass with a structure similar to the dimming glass in Example 2, except that the edges of the LC dimming film and the second bonding layer are not surrounded by the surrounding dam adhesive or the sealing adhesive.

The dimming glass of Comparative Example 3 was prepared according to the following steps.
(1) The first light-transmitting plate was cleaned, and the PVB adhesive film and the dimming film were placed thereon and fixed to obtain a partially bonded glass. The PVB adhesive film was previously sized to have its edge slightly larger than the edge of the first light-transmitting plate by 2 mm to 3 mm.
(2) The partially bonded glass was placed into a vacuum bag for cold vacuuming and initial pressing at a vacuum degree of -0.09 MPa and a maximum temperature of 115 °C.
(3) The butyl adhesive tape was placed in a 2 mm area from the edge of the dimming film of the partly bonded glass after the initially pressing. The thickness of the butyl adhesive tape was 0.8 mm, and two ports were formed on the butyl adhesive tape, one for adhesive filling and one for air release. Subsequently, a second light-transmitting plate was attached.
(4) The stack body obtained from step (3) was tilted to an angle of 20 degrees, filled with the liquid optically clear adhesive while allowing air to release, and then cured at room temperature. After the curing, the butyl adhesive tape was removed.
(5) The cured stack body obtained from step (4) was placed in an autoclave for high pressure and high temperature treatment. The pressure was 0.3 MPa, the temperature was 110 °C, and the treatment at the temperature was persisted for 60 minutes, to obtain the dimming glass.

The performances of the dimming glasses from the examples and the comparative examples were tested. Specifically, the sealing performance was evaluated by a boiling test (in 100°C boiling water for 2 hours) according to the GB9656-2021 standard. The mechanical performance was evaluated by free fall impact of a 226g steel ball from a height of 9 meters according to the GB9656-2021 standard. The data obtained are shown in Table 1 below.

**Table 1 Performances of dimming glasses in the examples and the comparative examples**

| | Appearance | Sealing performance test | Mechanical performance test |
|---|---|---|---|
| Example 1 | Good | Good (no water vapor | Good (qualified) |

| | | permeated) | |
|---|---|---|---|
| Example 2 | Good | Good | Good |
| Example 3 | Good | Good | Good |
| Comparative Example 1 | MURA | Good | Good |
| Comparative Example 2 | Good | Good | Broken down |
| Comparative Example 3 | Good | Water vapor permeated | Good |

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A dimming assembly, comprising a first light-transmitting plate, a first bonding layer, a dimming film, a second bonding layer, and a second light-transmitting plate stacked in sequence, and further comprising a sealing member,
wherein the first light-transmitting plate, the first bonding layer, and the dimming film are capable of being bonded through a lamination process;
the second bonding layer is formed by curing a liquid optically clear adhesive;
an edge of the dimming film and an edge of the second bonding layer are inwardly recessed relative to an edge of the first bonding layer; and
the sealing member is located between the first bonding layer and the second light-transmitting plate and is in contact with the edge of the dimming film and the edge of the second bonding layer.

2. The dimming assembly according to claim 1, wherein a thickness of the second bonding layer is in a range from 0.2 mm to 1 mm.

3. The dimming assembly according to any one of claims 1 to 2, wherein a viscosity of the liquid optically clear adhesive at 25°C is 500±200 mPa·s.

4. The dimming assembly according to any one of claims 1 to 3, wherein the liquid optically clear adhesive comprises an acrylic-based liquid optically clear adhesive or a silicone-based liquid optically clear adhesive.

5. The dimming assembly according to any one of claims 1 to 4, wherein the dimming film comprises a liquid crystal dimming film.

6. The dimming assembly according to any one of claims 1 to 5, wherein the first light-transmitting plate and the second light-transmitting plate each comprise a single curved glass or a double curved glass.

7. The dimming assembly according to any one of claims 1 to 6, wherein the sealing member is a sealing adhesive layer; or
wherein the sealing member comprises a sealing adhesive layer and a surrounding dam adhesive layer, the surrounding dam adhesive layer is in contact with the edge of the dimming film, the edge of the second bonding layer, the sealing adhesive layer, the first bonding layer, and the second light-transmitting plate, and the sealing adhesive layer is in contact with the surrounding dam adhesive layer, the first bonding layer, and the second light-transmitting plate.

8. The dimming assembly according to any one of claims 1 to 7, wherein a material of the first bonding layer is selected from polyvinyl butyral and ethylene vinyl acetate.

9. The dimming assembly according to any one of claims 1 to 8, wherein a thickness of the first bonding layer is in a range from 0.3 mm to 0.8 mm.

10. A method for preparing a dimming assembly, comprising steps of:
sequentially stacking and then laminating a first light-transmitting plate, a first bonding layer, and a dimming film, an edge of the dimming film being inwardly recessed relative to that of the first bonding layer;
placing a sealing member on an inwardly recessed area of the first bonding layer after the step of laminating, a thickness of the sealing member being greater than a thickness of the dimming film, and the sealing member forming a groove with a surface of the dimming film away from the first light-transmitting plate; and
filling the groove with a liquid optically clear adhesive, attaching a second light-transmitting plate, and curing the liquid optically clear adhesive, to obtain the dimming assembly.

11. The method according to claim 10, whereinin the step of placing the sealing member on the inwardly recessed area of the first bonding layer after the step of laminating, an adhesive filling port is formed on the sealing member, and the adhesive filling port is in communication with the groove; and
the step of filling the groove with the liquid optically clear adhesive and attaching the second light-transmitting plate comprises: attaching the second light-transmitting plate to a side of the dimming film away from the first light-transmitting plate, covering the groove with the second light-transmitting plate, and then filling the liquid optically clear adhesive into the groove through the adhesive filling port.

12. The method according to claim 11, wherein an air release port is also formed on the sealing member, the sealing member has a first surface and a second surface opposite to each other, the adhesive filling port is located at an end of the first surface, and the air release port is located at another end of the first surface away from the adhesive filling port, a position on the second surface corresponding to the adhesive filling port is recorded as a reference point, the adhesive filling port and the reference point are in a same horizontal plane, the air release port is located above the adhesive filling port, and
in the step of filling the liquid optically clear adhesive into the groove through the adhesive filling port, the stack body attached with the second light-transmitting plate is tilted, so that a distance from the adhesive filling port to the horizontal plane is greater than a distance from the reference point to the horizontal plane.

13. The method according to claim 12, wherein the stack body is tilted at an angle in a range from 15 degrees to 45 degrees.

14. The method according to any one of claims 10 to 13, wherein the step of laminating comprises: initially pressing the first light-transmitting plate, the first bonding layer, and the dimming film as a stack at a vacuum degree ranged from -0.1 MPa to -0.09 MPa and a temperature less than or equal to 115°C.

15. The method according to claim 14, further comprising:
after the step of curing the liquid optically clear adhesive, treating the cured stack body for 30 minutes to 90 minutes at a pressure ranged from 0.1 MPa to 0.6 MPa and a temperature ranged from 110°C to 140°C; or
after the step of laminating and before the step of placing the sealing member on the inwardly recessed area of the first bonding layer, treating the laminated stack body for 30 minutes to 90 minutes at a pressure ranged from 0.1 MPa to 0.6 MPa and a temperature ranged from 110°C to 140°C.

16. The method according to any one of claims 10 to 15, wherein the sealing member is a sealing adhesive layer;
the step of placing the sealing member on the inwardly recessed area of the first bonding layer comprises coating a sealing adhesive onto the inwardly recessed area of the first bonding layer; and
the step of curing the liquid optically clear adhesive comprises curing the sealing adhesive to form the sealing adhesive layer.

17. The method according to any one of claims 10 to 16, wherein the sealing member comprises a surrounding dam adhesive layer and a sealing adhesive layer;
the step of placing the sealing member on the inwardly recessed area of the first bonding layer comprises:
placing the surrounding dam adhesive onto part of the inwardly recessed area of the first bonding layer; and
placing the sealing adhesive layer onto rest of the inwardly recessed area of the first bonding layer after the step of curing the liquid optically clear adhesive.

18. The method according to claim 17, wherein a thickness of the surrounding dam adhesive layer is in a range from 0.2 mm to 1 mm.

19. A vehicle comprising the dimming assembly according to any one of claims 1 to 9.
